# EUROPEAN PATENT SPECIFICATION

(11) **EP 0 680 789 B1**
(45) Date of publication and mention of the grant of the patent: **26.08.1998**
(21) Application number: 94303289.6
(22) Date of filing: 06.05.1994
(51) Int. Cl.: B03B 9/06

(54) **Garbage disposal system**
Vorrichtung zur Entsorgung von Abfällen
Dispositif d'élimination de déchets

(43) Date of publication of application: 08.11.1995
(73) Proprietor: Yen, Chin-Ching, Lu-Kang, Chang-Hua Hsien (TW); Tai, Jen-Chieh, Taichung City (TW)
(72) Inventor: Yen, Chin-Ching, Lu-Kang, Chang-Hua Hsien (TW); Tai, Jen-Chieh, Taichung City (TW)
(74) Representative: King, James Bertram

(56) References cited:
- EP-A- 0 387 126
- EP-A- 0 567 184
- WO-A-93/02800
- US-A- 3 597 308
- US-A- 4 437 419

## Description

This invention relates to a garbage disposal system for disposing of garbage effectively.

Various methods are known and widely used in garbage disposal. These methods include, for example, incineration, land filling, embedding, compost forming. The most used and accepted garbage disposing method is burning or incineration. However, conventional garbage furnaces are not satisfactory in function because they do not separate waste plastics and minerals from the garbage to be disposed of. According to statistics, household garbage contains about 15% of waste plastics, about 60% of water, and about 18% of non-flammable solid substances such as metals, glass and stones. Burning waste plastics produces toxic gases causing a secondary pollution. Furthermore, molten plastic will cover the garbage causing the garbage not to be completely burnt. Because household garbage contains about 60% water, directly burning the garbage consumes much fuel. Therefore, the performance and service life of the garbage incineration furnaces are badly affected, and the disposal cost is greatly increased. Because family garbage contains much non-flammable solid substances, the size of the collection of ash left after burning may be as much as 40% the original volume of the garbage.

In US 3597308 a refuse disposal arrangement is disclosed wherein immersion and agitation in water provides separation with combustible material being subsequently burnt and paper being recovered for pulping. In US 4437419 an appratus is disclosed for separation and incineration of waste.

It is one of the objects of this invention to provide a garbage disposal system which separates non- flammable matter and plastic materials from the garbage before burning. It is another object of this invention to provide a garbage disposal system which is economic and durable in use. It is still another object of this invention to provide a garbage disposal system which provides a high performance.

To achieve the aforesaid objects and in accordance with this invention there is provided a garbage disposal unit characterised by a garbage classifier unit operable to separate plastics and minerals from garbage and which consists of a cutting mechanism operative to cut open plastic bags which contain garbage, a separation water trough for settling out garbage of high specific gravity to the bottom and allowing garbage of low specific gravity to rise to the surface of the water, squeezing means arranged to squeeze water from the floating garbage delivered from said water separation trough and a blower separator operative to separate plastic films and sheets from the compacted garbage obtained from said squeezing means; a garbage incinerator furnace operative to burn garbage delivered from the garbage classifier unit, a waste gas treatment unit operative to treat exhaust gas from the incinerator, and a sewage treatment unit operative to treat waste water from the garbage classifier unit and the waste gas treatment unit is operative for recycling waste gas.

In a preferred embodiment the garbage disposal unit is characterised by said garbage classifier unit comprising a garbage receiving trough in which the garbage contained in plastic bags is dumped, the cutting mechanism being disposed in said garbage gathering trough and operative to cut open the plastic bags dumped in said garbage gathering trough the water separation trough having a sedimentation basin for settling out garbage of high specific gravity to the bottom and allowing garbage of low specific gravity to rise to the surface of the water contained in said water separation trough , impellers disposed in said water separating trough and operative to propel floating garbage from said water separation trough to said squeezing means , a first conveyer operative to carry settled out garbage from said sedimentation basin to a collecting place, a second conveyer system operative to carry floating garbage of low specific gravity from said water separation trough to said squeezing means, the garbage incinerator furnace having an inlet port connected to said blower separator of said garbage classifier unit by a third conveyer system and an ash outlet at the bottom; the waste gas treatment unit being connected to the top of said furnace and controlled to treat waste gas from said furnace, said waste gas treatment unit comprising a sprinkler filter operative to remove solid substances from the output waste gas of said furnace, a dust collector connected to said sprinkler filter to collect solid substances, a chimney connected to said dust collector for carrying smoke away from said dust collector, and a waste gas return pipe having one end connected to said furnace and an opposite end connected to said sprinkling filter and said dust collector; a water supply system controlled to provide water to said water separation trough of said garbage classifier and said sprinkler filter of said waste gas treatment unit; the sewage treatment unit having an input port connected to said garbage classifier and an output port connected to said water supply system.

This invention will now be described in more detail by way of example and with reference to the accompanying drawings, in which:
- Figure 1: is a schematic plan view showing the general layout of the garbage disposal unit of this invention,
- Figure 2: is a side view of a cutting mechanism according to this invention;
- Figure 3: is a plan view of the cutting mechanism shown in Figure 2,
- Figure 4: is a view of a separation water trough according to this invention,
- Figure 5: is a side view of a compactor (squeezer) according to this invention;
- Figure 6: is a side view of a blower separator according to this invention, and
- Figure 7: is a sectional view along line VII- VII of Figure 6.

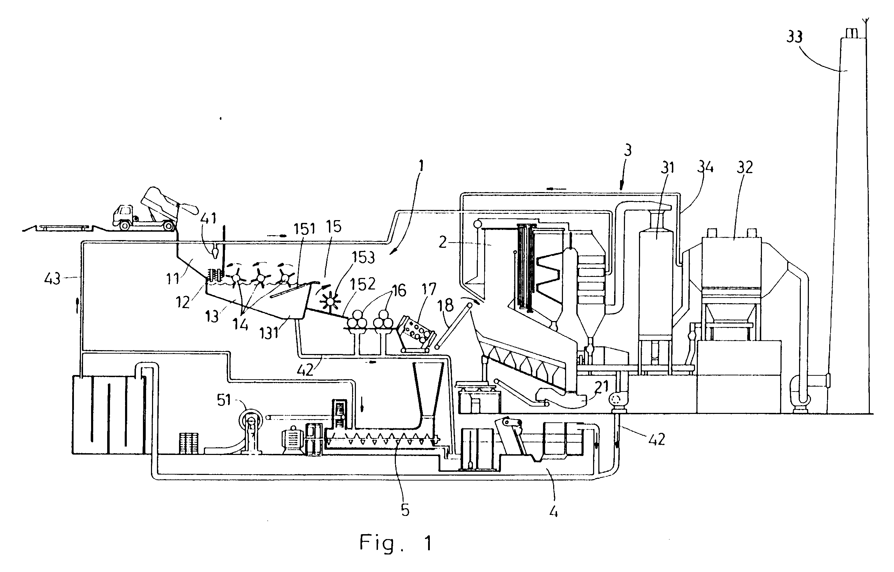

Referring to the drawings in detail and turning now first to Figure 1, a garbage disposal system in accordance with this invention generally comprises a classifier unit 1, a garbage incinerator furnace 2, a waste gas treatment unit 3, and a sewage treatment unit 4.

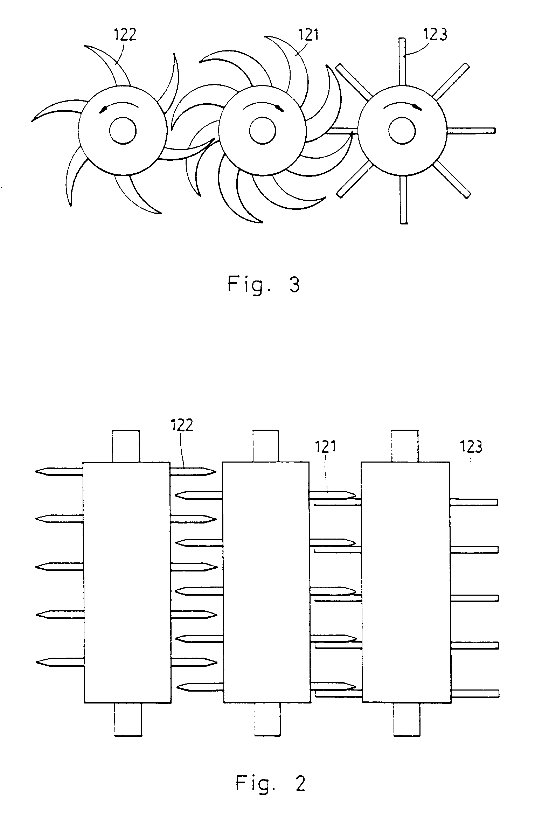

Referring to Figures 2 and 3 and Figure 1 again, the classifier unit 1 comprises a comminuting or cutting mechanism 12 disposed at the bottom outlet of the garbage receiving trough 11 thereof. The cutting mechanism 12 comprises two sets of cutter blades 121; 122 alternatively arranged and turned in reverse directions, and a set of rods 123 alternatively set behind the cutter blades 121 and turned in the same direction relative to the cutter blades 121. When plastic garbage bags are dumped in the garbage trough 11, they are cut by the cutter blades 121;122 causing the garbage to be dropped into a separation water trough 13, and at the same time, the empty plastic garbage bags are removed by the rods 123 and separately collected for recycling as reclaimed plastics.

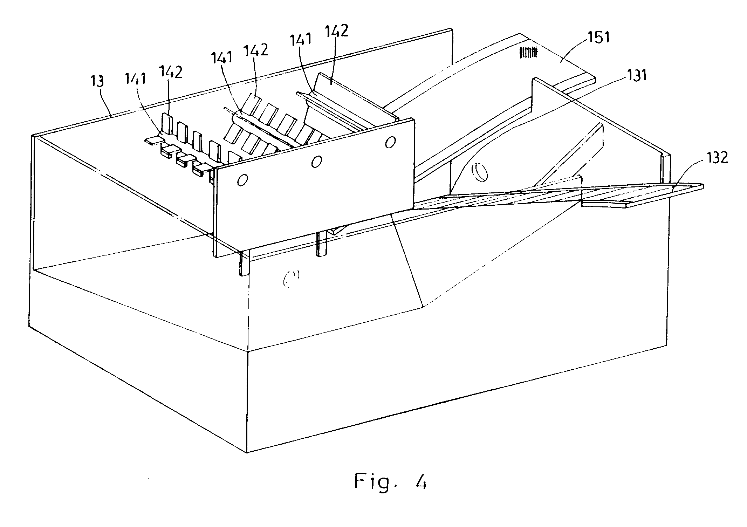

The separation water trough 13 as shown in Figure 4, comprises a sedimentation basin 131 where metals, stones, glass and other non-flammable matter settle to the bottom of a liquid contained in the sedimentation basin to be removed from the separation water trough 13 by a first conveyer system 132; matter of low specific gravity floats on the liquid. There are three parallel impellers 14 disposed on the surface of the liquid in the separation water trough 13, having each a revolving shaft 141 and a plurality of blades 142 around the respective revolving shaft 141. As the impellers 14 are turned, the floated garbage is propelled towards the rear side of the separation water trough 13 and then carried to compactors 16 by a second conveyer system 15. While the floated garbage is propelled toward the rear side of the separation water trough 13, it is softened by the liquid in the separation water trough 13. The second conveyer system 15 comprises a meshed conveying belt 151 which moves to carry the floated garbage out of the separation water trough 13, a solid conveying belt 152 moves to carry the gathered garbage from the meshed conveying belt 151 to each compactor 16. A rotary wheel 153 disposed above the solid conveying belt 152 and turned in the reversed direction relative to the solid conveying belt 152 is used to spread out the garbage being carried so as to control the garbage output to either compactor 16.

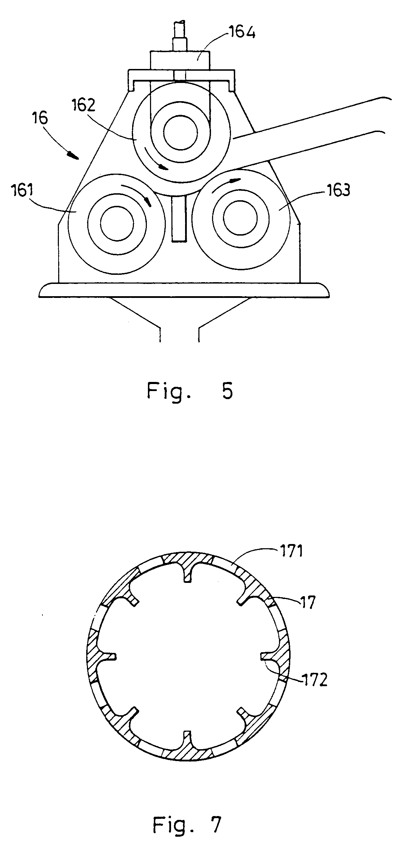

The compactor 16 comprises (Figure 5) a hydraulic buffer mechanism 164 disposed at the top, and three rollers, namely the first roller 161, the second roller 162 and the third roller 163 respectively disposed below the hydraulic buffer mechanism 164. The first and third rollers 161;163 are bilaterally disposed at the bottom.

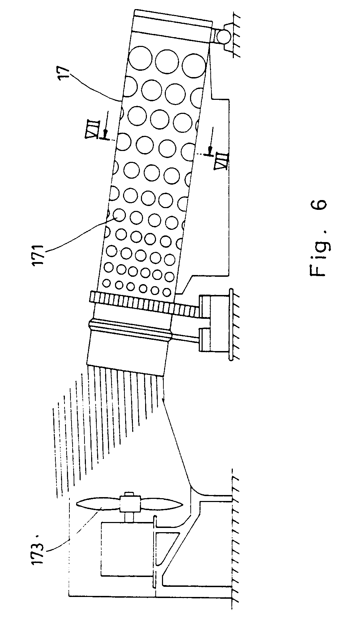

The second roller 162 is disposed between the hydraulic buffer mechanism 164 and the first and third rollers 161;163. The pitch between the first and second rollers 161;162 is greater than that between the second and third rollers 162;163. When the collected garbage is delivered through the compactor 16, water is squeezed away. The hydraulic buffer mechanism 164 protects the compactor 16 when a hard object is crushed between the rollers 161;162;163. The output of the compactors 16 is connected to a blower separator 17. The blower separator 17, as shown in Figures 6 and 7, comprises a perforated cylinder 171 having a plurality of axial bumper ribs 172 spaced on the inside, and a blower 173 driven to send currents of air toward the inside of the perforated cylinder 171. The holes on the perforated cylinder 171 are made gradually bigger towards the rear end. The perforated cylinder 171 is disposed in a sloping position and turned to agitate the garbage, permitting plastic films and sheets to be blown to a fixed location by the blower 173 for further collection. The other garbage separated from the blower separator 17 is then delivered by a third conveyer system 18 to a garbage incinerator furnace 2 for burning.

Referring to Figure 1 again, the waste gas treatment unit 3 is mounted on the furnace 2 at the top. The furnace 2 has an ash outlet 21 at the bottom. The collection of garbage ash left after burning is collected and delivered to a collecting point.

The waste gas treatment unit 3 comprises a sprinkler filter 31, a dust collector 32 connected to the sprinkler filter 31 and a chimney 33 connected to the dust collector 32. The sprinkler filter 31 and the dust collector 32 are further linked by a waste gas return pipe 34 to the furnace 2 for guiding waste gas to the furnace. Because the temperature of the waste gas from the sprinkler filter 31 and the dust collector 32 is as high as about 200° C, it can be used to accelerate the burning of the garbage.

The classifier unit 1 further comprises a water sprayer device 41 disposed above the cutting mechanism 12 and controlled to spray water over the garbage being dumped in the gathering trough 11. Waste water from the gathering trough 11, the compactors 16, the separation water trough 13 and the sprinkler filter 31 is guided by a waste water pipe 42 to the sewage treatment unit 4. The sewage treatment unit 4 has an output port connected to a water supply system by a return water pipe 43 for repeated use. The garbage furnace 2, the sprinkler filter 31 and the dust collector 32, and the chimney 33 are known devices, therefore they are not described herein in detail.

While only one embodiment of the present invention has been shown and described, it will be understood that various modifications and changes could be made without departing from the scope of the invention as defined in the claims. for example, a washing apparatus 5 may be installed and controlled to wash the plastic garbage separated from the blower separator 17, and a compactor 51 may be installed and controlled to compact the plastic garbage being washed through the washing machine 5 to enable the compacted plastic waste to be collected for making reclaimed plastics.

## Claims

1. A garbage disposal unit characterised by a garbage classifier unit (1) operable to separate plastics and minerals from garbage and which consists of a cutting mechanism (12) operative to cut open plastic bags which contain garbage, a separation water trough (13) for settling out garbage of high specific gravity to the bottom and allowing garbage of low specific gravity to rise to the surface of the water, squeezing means (16) arranged to squeeze water from the floating garbage delivered from said water separation trough (13) and a blower separator (17) operative to separate plastic films and sheets from the compacted garbage obtained from said squeezing means (16); a garbage incinerator furnace (2) operative to burn garbage delivered from the garbage classifier unit (1), a waste gas treatment unit (3) operative to treat exhaust gas from the incinerator, and a sewage treatment unit (4) operative to treat waste water (42) from the garbage classifier unit (1) and the waste gas treatment unit (3) is operative for recycling waste gas.

2. A garbage disposal unit in accordance with Claim 1, characterised by said garbage classifier unit (1) comprising a garbage receiving trough (11) in which the garbage contained in plastic bags is dumped, the cutting mechanism (12) being disposed in said garbage gathering trough (11) and operative to cut open the plastic bags dumped in said garbage gathering trough (11), the water separation trough (13) having a sedimentation basin (131) for settling out garbage of high specific gravity to the bottom and allowing garbage of low specific gravity to rise to the surface of the water contained in said water separation trough (13), impellers (14) disposed in said water separating trough (13) and operative to propel floating garbage from said water separation trough (13) to said squeezing means (16), a first conveyer (132) operative to carry settled out garbage from said sedimentation basin (131) to a collecting place, a second conveyer system (151) operative to carry floating garbage of low specific gravity from said water separation trough (13) to said squeezing means (16), the garbage incinerator furnace (2) having an inlet port connected to said blower separator (17) of said garbage classifier unit (1) by a third conveyer system (18) and an ash outlet (21) at the bottom; the waste gas treatment unit (3) bein connected to the top of said furnace (2) and controlled to treat waste gas from said furnace (2), said waste gas treatment unit (3) comprising a sprinkler filter (31) operative to remove solid substances from the output waste gas of said furnace (2), a dust collector (32) connected to said sprinkler filter to collect solid substances, a chimney (33) connected to said dust collector (32) for carrying smoke away from said dust collector (32) , and a waste gas return pipe (34) having one end connected to said furnace (2) and an opposite end connected to said sprinkling filter (31) and said dust collector (32); a water supply system controlled to provide water to said water separation trough (13) of said garbage classifier (1) and said sprinkler filter (31) of said waste gas treatment unit (3); the sewage treatment unit (4) having an input port (42) connected to said garbage classifier (1) and an output port (43) connected to said water supply system.

3. A garbage disposal unit according to Claim 2, characterised in that each impeller (14) of said garbage classifier unit (1) comprises a revolving shaft (141) horizontally disposed in said water separation trough (13) and a plurality of blades (142) mounted around said revolving shaft (141) and turned by said revolving shaft to propel floating garbage in said water separation trough (13) toward said second conveyer system (151).

4. A garbage disposal unit according to Claim 1 or 2 or 3, characterised in that a washing apparatus (5) is provided to wash plastic garbage obtained from said blower separator (17), with a compactor operative to compact plastic garbage obtained from said washing machine (5).

5. A garbage disposal unit according to Claim 2, 3 or 4, characterised in that said second conveyer system (151) comprises a meshed conveying belt controlled to carry floating garbage out of said water separation trough (13).

6. A garbage disposal unit according to any preceding claim 1 to 5 characterised in that said cutting mechanism (12) of said garbage classifier unit (1) comprises a first set of cutter blades (121) and a second set of cutter blades (122) alternatively arranged and rotated in reversed directions, and a set of rods (123) alternatively arranged with said first set of cutter (121) blades and turned in the same direction.

7. A garbage disposal unit according to any preceding claim 1 to 6 characterised in that each squeezing means (16) comprises a hydraulic buffer mechanism (164) disposed at the top, a first roller (161) and a third roller (163) disposed side-by-side at the bottom, and a second roller (162) disposed between said first (161) and third rollers (163) and said hydraulic buffer mechanism (164), the pinch between said first (161) and second (162) rollers being provided for input of garbage from said second conveyer system (152), the pinch between said second (162) and said third (163) rollers being provided for output of squeezed garbage, the pinch between said first (161) and second (162) rollers being greater than that between said second (162) and third (163) rollers.

8. A garbage disposal unit according to any preceding claim 1 to 7 characterised in that said blower separator (17) comprises a perforated cylinder (171) disposed in a sloping position and turned on a shaft thereof, and a blower (173) controlled to blow air current through said perforated cylinder (171), said perforated cylinder (171) comprising a plurality of holes spaced around the periphery thereof, and a plurality of axial bumper ribs (172) spaced on the inside, the holes on the periphery of said perforated cylinder (171) being arranged gradually larger towards the rear end of said perforated cylinder.

## Patentansprüche

1. Abfallentsorgungsanlage, **gekennzeichnet durch** eine Abfall-Sortieranlage (1) zur Trennung von Kunststoff- und Mineralienanteilen aus dem Abfall, bestehend aus einer Schneidvorrichtung (12) zum Auftrennen der den Abfall enthaltenden Kunststoffsäcke, ein Wasserbecken (13), in dem sich Abfall mit hohem spezifischen Gewicht am Boden absetzt, während Abfall mit geringem spezifischen Gewicht an die Wasseroberfläche gelangt, Quetschvorrichtungen (16) zum Ausquetschen des Wassers aus dem aus dem Trenn-Wasserbecken (13) zugeführten schwimmenden Abfall und ein Gebläseabscheider (17), der Kunststoff-Filme und -Folien aus dem von der Quetschvorrichtung (16) angelieferten kompaktierten Abfall austrennt, durch einen Müllverbrennungsofen (2), in dem der von der Sortieranlage (1) eingehende Müll verbrannt wird, eine Abgasbehandlungsanlage (3), in der die Abgase des Verbrennungsofens behandelt werden und durch eine Abwasserbehandlungsanlage (4), in der das Abwasser (42) aus der Sortieranlage (1) wieder aufbereitet wird und die Abgasbehandlungsanlage (3) zur Wiederaufbereitung der Abgase.

2. Abfallentsorgungsanlage nach Anspruch 1, **dadurch gekennzeichnet,** daß die Sortieranlage (1) ein Abfall-Aufgabebecken (11) für den in Kunststoffsäcken angelieferten Abfall aufweist, daß die Schneidvorrichtung (12) im Abfall-Aufgabebecken (11) angeordnet ist und die dort abgelieferten Kunststoffsäcke aufschneidet, daß das Trenn-Wasserbecken (13) ein Absetzbecken (131) aufweist, an dessen Boden sich der Abfall mit hohem spezischen Gewicht absetzt, während Abfall mit geringem spezifischen Gewicht an die Wasseroberfläche im Trenn-Wasserbecken (13) steigt, daß das Trenn-Wasserbecken (13) eine Flügelradanordnung (14) aufweist, die den schwimmenden Abfall vom Trenn-Wasserbecken (13) zur Quetschvorrichtung (16) befördert, daß eine erste Fördervorrichtung (132) den im Absetzbecken (131) abgesetzten Abfall einer Sammelstelle zuführt und eine zweite Fördereinrichtung (151) den schwimmenden Abfall mit leichtem Gewicht aus dem Trenn-Wasserbecken (13) der Quetschvorrichtung (16) zuführt, daß der Müllverbrennungsofen (2) eine mit dem Gebläseabscheider (17) der Sortieranlage (1) über eine dritte Fördereinrichtung (18) verbundene Einlaßöffnung aufweist sowie einen Aschenaustritt (21) an seinem Boden, daß die Abgasbehandlungsanlage (3) an die Oberseite des Verbrennungsofens (2) anschließt und gesteuert die Abgase aus dem Ofen (2) behandelt, daß die Abgasbehandlungsanlage (3) einen Sprinklerfilter (31) zum Entfernen von Feststoffen aus den Abgasen des Ofens (2) aufweist, daß ein mit dem Sprinklerfilter verbundener Staubsammler (32) zur Aufnahme von Feststoffen vorgesehen ist sowie ein mit dem Staubsammler (32) verbundener Kamin (33) zum Rauchabzug vom Staubsammler (32) und eine Abgas-Rücklaufleitung (34), deren eines Ende mit dem Verbrennungsofen (2) und deren entgegengesetztes Ende mit dem Sprinklerfilter (31) und dem Staubsammler (32) verbunden ist, daß eine Wasserzuführvorrichtung vorgesehen ist, die gesteuert dem Trenn-Wasserbecken (13) der Sortieranlage (1) und dem Sprinklerfilter (31) der Abgas-Behandlungsanlage (3) Wasser zuführt; daß die Abwasserbehandlungsanlage (4) eine mit der Sortieranlage (1) verbundene Eintrittssöffnung (42) aufweist sowie eine mit der Wasserzuführvorrichtung verbundene Austrittsöffnung (43).

3. Abfallentsorgungsanlage nach Anspruch 2, **dadurch gekennzeichnet,** daß jede Flügelradanordnung (14) der Sortieranlage (1) eine angetriebene, horizontal im Trenn-Wasserbecken angeordnete Welle (141) sowie mehrere um die angetriebene Welle (141) herum angeordnete Flügel (142) aufweist, die bei Drehung durch die Welle den im Trenn-Wasserbecken schwimmenden Abfall an die zweite Fördervorrichtung (151) treiben.

4. Abfallentsorgungsanlage nach den Ansprüchen 1 oder 2 oder 3, **dadurch gekennzeichnet,** daß eine Waschvorrichtung (5) vorgesehen ist, die den vom Gebläseabscheider (17) stammenden Kunststoffabfall wäscht und ein Kompaktierer vorgesehen ist, der den Kunststoffabfall aus der Waschvorrichtung (5) kompaktiert.

5. Abfallentsorgungsanlge nach den Ansprüchen 2,3 oder 4, **dadurch gekennzeichnet,** daß die zweite Fördereinrichtung (151) ein Gitterband aufweist, das den schwimmenden Abfall aus dem Trenn-Wasserbecken (13) transportiert.

6. Abfallentsorgungsanlage nach den vorhergehenden Ansprüchen 1 bis 5, **dadurch gekennzeichnet,** daß die Schneidvorrichtung (12) der Sortieranlage (1) eine erste und eine zweite Anordnung von Schneidmessern (121 bzw. 122) aufweist, die relativ zueinander versetzt angeordnet und in entgegengesetzter Richtung angetrieben sind und eine Rechenanordnung (123), die zur ersten Anordnung der Schneidmesser (121) versetzt angeordnet und in der gleichen Richtung angetrieben ist.

7. Abfallentsorgungsanlage nach den vorstehenden Ansprüchen 1 bis 6, **dadurch gekennzeichnet,** daß jede Quetschvorrichtung (16) an ihrer Oberseite eine hydraulische Puffervorrichtung (164) aufweist sowie eine erste Walze (161) und eine dritte Walze (163), die nebeneinander am Boden angeordnet sind und eine zwischen der ersten (161) und der dritten Walze (163) und der hydraulischen Puffervorrichtung (164) angeordnete zweite Walze (162), wobei der Walzenabstand zwischen der ersten (161) und der zweiten Walze (162) zur Aufnahme von Abfall aus der zweiten Fördervorrichtung (152) gewählt ist und der Walzenabstand zwischen der zweiten (162) und der dritten Walze (163) zum Transport des gequetschten Abfalls gewählt ist, so daß der Walzenabstand zwischen den ersten und zweiten Walzen (161 bzw. 162) größer ist als zwischen den zweiten und dritten Walzen (162 bzw. 163).

8. Abfallentsorgungsanlage nach einem der vorhergehenden Ansprüche 1 bis 7, **dadurch gekennzeichnet,** daß der Gebläseabscheider (17) aus einem perforierten, geneigt angeordneten und um seine Achse drehbaren Zylinder (171) besteht und aus einem Gebläse (173), das einen Luftstrom durch den perforierten Zylinder (171) leitet, daß der perforierte Zylinder (171) eine Vielzahl von an seinem Umfang vorgesehenen Löchern aufweist sowie eine Vielzahl von an seiner Innenfläche axial angeordneten Stoßrippen (172), wobei die Lochweite im Zylindermantel von einem Ende zum anderen zunimmt.

## Revendications

1. Unité de traitement d'ordures, caractérisée par une unité (1) de classement d'ordures destinée à séparer les matières plastiques et les matières minérales des ordures et qui comporte un mécanisme de coupe (12) destiné à ouvrir des sacs de matière plastique qui contiennent des ordures, une rigole (13) de séparation par l'eau destinée à la sédimentation des ordures de densité élevée vers le fond, permettant aux ordures de faible densité de remonter à la surface de l'eau, un dispositif (16) de pressage destiné à chasser l'eau des ordures flottantes par pressage lors de la transmission par la rigole (13) de séparation dans l'eau, et un séparateur à ventilateur (17) destiné à séparer les feuilles et films de matière plastique des ordures comprimées obtenues à partir du dispositif de pressage (16), un four (2) à incinérateur d'ordures destiné à brûler les ordures transmises par l'unité (1) de classement d'ordures, une unité (3) de traitement de gaz usés destinée à traiter les gaz d'échappement de l'incinérateur, et une unité (4) de traitement des eaux usées destinée à traiter les eaux usées (42) provenant de l'unité (1) de classement d'ordures, et l'unité (3) de traitement de gaz usés est destinée à recycler les gaz usés.

2. Unité de traitement d'ordures selon la revendication 1, caractérisée en ce que l'unité (1) de classement d'ordures comprend une rigole (11) de réception d'ordures dans laquelle sont déversées des ordures contenues dans les sacs de matière plastique, le mécanisme de coupe (12) étant disposé dans cette rigole (11) et ouvrant par coupure les sacs de matière plastique déversés dans la rigole (11) collectrice des ordures, la rigole (13) de séparation par de l'eau ayant un bassin de sédimentation (131) destiné à la sédimentation des ordures de densité élevée au fond et permettant aux ordures de faible densité de remonter à la surface de l'eau contenue dans la rigole (13) de séparation par l'eau, des roues (14) placées dans la rigole (13) de séparation par l'eau et destinées à faire progresser les ordures flottantes de la rigole (13) vers le dispositif de pressage (16), un premier transporteur (132) destiné à entraîner les ordures qui se sont déposées du bassin de sédimentation (131) à un emplacement collecteur, un second système transporteur (151) destiné à transporter les ordures flottantes de faible densité de la rigole (13) de séparation par l'eau vers le dispositif de pressage (16), le four (2) à incinérateur d'ordures ayant un orifice d'entrée raccordé au séparateur à ventilateur (17) de l'unité (1) de classement d'ordures par un troisième système transporteur (18) et une sortie (21) de cendres à la partie inférieure, l'unité (3) de traitement de gaz usés étant raccordée à la partie supérieure du four (2) et étant commandée pour le traitement des gaz usés provenant du four (2), l'unité (3) de traitement des gaz usés comprenant un filtre (31) à pulvérisation destiné à retirer les substances solides des gaz usés de sortie du four (2), un collecteur de poussières (32) raccordé au filtre à pulvérisation pour la collecte des substances solides, une cheminée (33) raccordée au collecteur de poussières (32) et destinée à entraîner la fumée à distance du collecteur de poussières (32), et une conduite (34) de retour de gaz usés ayant une première extrémité raccordée au four (2) et une extrémité opposée raccordée au filtre à pulvérisation (31) et au collecteur de poussières (32), et un système d'alimentation en eau commandé afin qu'il transmette de l'eau à la rigole (13) de séparation par l'eau de l'unité (1) de classement d'ordures et au filtre à pulvérisation (31) de l'unité (3) de traitement de gaz usés, l'unité (4) de traitement d'eaux usées ayant un orifice d'entrée (42) raccordé à l'unité (1) de classement d'ordures et un orifice de sortie (43) raccordé au système d'alimentation en eau.

3. Unité de traitement d'ordures selon la revendication 2, caractérisée en ce que chaque roue (14) de l'unité (1) de classement d'ordures comprend un arbre rotatif (141) disposé horizontalement dans la rigole (13) de séparation par l'eau et plusieurs palettes (142) montées autour de l'arbre rotatif (141) et entraînées en rotation par l'arbre rotatif afin que les ordures qui flottent avancent dans la rigole (13) de séparation par l'eau vers le second système transporteur (151).

4. Unité de traitement d'ordures selon la revendication 1, 2 ou 3, caractérisée en ce qu'un appareil de lavage (5) est destiné à laver les ordures de matière plastique obtenues à partir du séparateur à ventilateur (17), avec un organe de compression destiné à compacter les ordures de matière plastique obtenues à partir de la machine de lavage (5).

5. Unité de traitement d'ordures selon la revendication 2, 3 ou 4, caractérisée en ce que le second système transporteur (151) comprend une courroie transporteuse à mailles commandée afin qu'elle transporte les ordures flottantes en dehors de la rigole (13) de séparation par l'eau.

6. Unité de traitement d'ordures selon l'une quelconque des revendications précédentes 1 à 5, caractérisée en ce que le mécanisme (12) de l'unité (1) de classement d'ordures comporte un premier ensemble de lames de coupe (121) et un second ensemble de lames de coupe (122) disposées en alternance et entraînées en rotation en sens inverse, et un ensemble de tiges (123) disposées en alternance avec les lames de coupe (121) du premier ensemble et entraînées en rotation dans le même sens.

7. Unité de traitement d'ordures selon l'une quelconque des revendications 1 à 6, caractérisée en ce que chaque dispositif de pressage (16) comporte un mécanisme tampon hydraulique (164) placé à la partie supérieure, un premier rouleau (161) et un troisième rouleau (163) placés côte à côte à la partie inférieure, et un second rouleau (162) placé entre le premier rouleau (161) et le troisième (163) et le mécanisme tampon hydraulique (164), le pincement réalisé entre les premier (161) et second (162) rouleaux étant assuré pour la transmission des ordures provenant du second système transporteur (152), le pincement entre les second (162) et troisième (163) rouleaux étant assuré pour l'extraction des ordures pressées, le pincement entre le premier (161) et le second (162) rouleau étant plus grand que celui qui existe entre le second (162) et le troisième (163) rouleau.

8. Unité de traitement d'ordures selon l'une quelconque des revendications précédentes 1 à 7, caractérisée en ce que le séparateur à ventilateur (17) comporte un cylindre perforé (171) ayant une position inclinée et tournant sur un arbre du cylindre, et un ventilateur (173) commandé afin qu'il souffle un courant d'air à travers le cylindre perforé (171), le cylindre perforé (171) ayant plusieurs trous espacés à sa périphérie, et plusieurs nervures axiales (172) de butoir espacées à l'intérieur, les trous de la périphérie du cylindre perforé (171) étant progressivement plus gros vers l'extrémité arrière du cylindre perforé.
